# EUROPEAN PATENT APPLICATION

(11) **EP 4 287 558 A1**
(43) Date of publication of application: **06.12.2023**
(21) Application number: 22177099.3
(22) Date of filing: 02.06.2022
(51) Int. Cl.: H04L 9/32, H04L 9/00

(54) **BLOCKCHAIN-BASED CERTIFICATION**

(71) Applicant: Adramitini, 8226 Mamer (LU)
(72) Inventor: FERRANT, Francis, 8226 Mamer (LU); RAHALI GUICHARD, Anthony, 8226 Mamer (LU)
(74) Representative: Rogiest, Wouter

(57) **Abstract**

The invention provides, amongst other aspects, a computer-implemented method for certifying a physical entity on a blockchain, comprising the steps of: receiving a specification of said physical entity, said specification comprising an entity id; receiving a customization specification with respect to said physical entity, said customization specification comprising at least one technical feature; providing a recipient wallet; emitting, from a distribution wallet, one or more tokens to said recipient wallet, thereby generating a blockchain transaction number; generating an electronic document, comprising at least said entity id, said at least one technical feature, an identification associated with said recipient wallet, and a reference toward said blockchain transaction number.

## Description

### Field of the invention

The present invention relates to the technical domain of registration of portions of data in a blockchain, particularly to certifying physical entities, preferably physical objects, through a blockchain.

### Background art

In recent times, blockchain technology and/or tokens are increasingly used to provide irrefutable proof for any application wherein evidence is required, as in the case of agreements. Thereby, the use of smart contracts to generate tokens on a blockchain has steadily gained popularity, taking over the role of traditional trusted parties in the certification of these agreements.

A particular challenge arises with physical entities for which the associated rights are distributed over several parties. For instance, ownership may be with a first party, whereas certain rights may be with another party. In such contexts, agreements play a major role. Thereby, it is desirable that the associated agreement adheres to criteria of unambiguity, integrity, authenticity, and non-repudiation. This is enabled by proper certification of the agreement. As blockchains inherently provide a means for irrefutable proof, there is a need for new ways to perform certification by means of blockchain technology.

EP3926496A1, US20220058706A1, US20220141231A, WO2019051451A1 and US10373158B1 disclose related methods but are overly complex and/or are not well adapted to the requirements of certification of physical entities.

The present invention aims at addressing issues inherent to certification, such as the issues mentioned above.

### Summary of the invention

According to a first aspect, the present invention provides a computer-implemented method for certifying a physical entity on a blockchain, comprising the steps of:
- receiving a specification of said physical entity, said specification comprising an entity id;
- receiving a customization specification with respect to said physical entity, said customization specification comprising at least one technical feature;
- providing a recipient wallet;
- emitting, from a distribution wallet, one or more tokens to said recipient wallet, thereby generating a blockchain transaction number;
- generating an electronic document, comprising at least said entity id, said at least one technical feature, an identification associated with said recipient wallet, and a reference toward said blockchain transaction number.

Herein, the entity id may be any reference or coordinate enabling unique identification of the physical entity. For instance, in embodiments wherein the physical entity relates to real estate property, this may be the street address, or a set of geographic coordinates. Furthermore, the reference toward said blockchain transaction number may be any descriptor, according to any naming convention, as long as it enables unique identification of the blockchain transaction number. In embodiments, the reference toward the blockchain transaction number is the number. This may have the advantage of simplicity and transparency. In embodiments, the reference toward the blockchain transaction number may be a unique code generated for the given blockchain transaction number, wherein the mapping between the unique code and the blockchain transaction number may be public or private depending on the requirements set by the parties corresponding to the distribution wallet and the recipient wallet. This may allow for more flexibility in the selection of which certification information is public and private.

In embodiments, the electronic document is a pdf document.

The method provided by the invention may be advantageous as it may address the need for certification of physical entities for which the associated rights are distributed over several parties. For instance, ownership may be with a first party, whereas certain rights may be with another party, such as the right to customization. Key requirements for the associated agreement are unambiguity, integrity, authenticity, and non-repudiation. Accordingly, a correct specification of the many involved technical features may be encoded through certification according to the invention. This technical problem is in se independent of the actual degree of finishing of the physical entity (i.e., already build, not constructed yet, or an extended reality object), requiring a suitable technical approach of encoding information through certification. This technical problem may be resolved by the invention, advantageously associating the specification of the physical entity and the customization specification to a token that is emitted to a recipient wallet.

Thereby, the method enables reliable certification in a variety of use cases. For instance, in embodiments, the owner of a physical entity, e.g., a real estate property, may agree with a tenant to allow for customization of the property by the tenant, and record this agreement by certification on the blockchain through a method according to the invention. Thereby, the owner and tenant may be assisted by an intermediary party associated with the distribution wallet, by the emission of a token to the recipient wallet, which is associated with the tenant. Accordingly, the tenant has advanced control over this agreement, as this token may be kept and/or transferred, while the transfer of the token is tracked by the blockchain, ensuring transparency. Moreover, the owner and tenant are provided with an electronic document providing a reference toward the blockchain transaction number, which may allow to verify the current token status at future times by consulting the blockchain.

According to a second aspect, the invention provides a device comprising a processor and memory comprising instructions which, when executed by said processor, cause the device to execute the method according to the invention.

According to a further aspect, the invention provides a system comprising the device according to the invention and a server connected to said device, wherein said device is further configured to:
- send the generated electronic document to the server; and
wherein said server is configured to:
- upon receipt of said electronic document, store said electronic document.

Such a system may advantageously provide a mixed public/private approach to certification of physical entities, wherein a blockchain transaction number serves as public "proof" of certification, while the electronic document may contain further details which may be kept private, as is commonly required for agreements between parties. Such a system is not afforded by any of EP3926496A1, US20220058706A1, US20220141231A, WO2019051451A1 and US10373158B1, which do not disclose nor hint upon such an approach.

According to a further aspect, the invention provides a computer program product for carrying out a computer-implemented method according to the invention, which computer program product comprises at least one readable medium in which computer-readable program code portions are saved, which program code portions comprise instructions for carrying out said method.

Preferred embodiments and their advantages are provided in the description and the dependent claims.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "physical entity" is an umbrella term for a physical object or a virtual representation of a physical object. The term "physical object" thereby may refer to any object that physically extends in space, e.g., a ball or an apple, which inherently is a unique object instance. In such instances, certification may relate to emitting a token on a blockchain for attributing a unique identification corresponding to the physical object and/or for certifying authenticity and/or for providing a proof of ownership. In contrast, the term "virtual (object) representation" may refer to any virtual representation, i.e., a portion of data, which may be stored, e.g., as a bitstring on a digital recording medium, which may relate to a physical object but may also relate to a purely digital representation such as an audio or video or media file or any other portion of data. Thereby, the certification of the virtual representation may relate to emitting a token on a blockchain for certifying authenticity or ownership, preferably without necessitating any restriction on the sharing or copying of the underlying portion of data over recording media or online networks or, related, social media. In the context of agreements, the physical entity may be specified according to a specification that does not necessarily correspond to its current state, but rather the desired state in which the object should be brought. Also, in the context of agreements between a first and second party, it may be important to distinguish between the physical entity, on the one hand, which may relate to first technical features, and the customization, which may relate to second technical features being customization-related features.

In this document, the term " token" refers to any digital token that is to some extent fungible. This includes any fungible token as known to the skilled person but also includes any other form of fungible token derived from a non-fungible token (NFT). For instance, a token may comprise one or more fungible tokens derived from a fractionalized NFT.

In this document, the term "wallet" refers to any secure means for storing a token on a blockchain. Therein, security is maintained by means of at least a wallet key being a cryptographic key as known to the skilled person. This may relate, e.g., to a Pera wallet and/or an Ethereum wallet as known to the skilled person.

In this document, the term "geographic location reference" may relate to any of a street address and geographic coordinates. The term "geographic coordinates" may refer to any set of coordinates allowing global position determination. This may relate, e.g., to a set of coordinates according to the geographic coordinate system, and/or to coordinates of a GNSS such as GPS, GLONASS or Galileo. In embodiments, the street address may or may not be equivalent to geographic coordinates, with both being interchangeable as means of geographic location reference. For instance, for many houses in urban environments, the street address may be sufficient to unambiguously determine their geographic location. On the other hand, a garden plot may not have a house number and its street address may hence not be associated unambiguously with geographic coordinates.

In this document, ASA and ERC-20 refer to technical standards used for token implementation on blockchains. Thereby, ASA is shorthand for Algorand Standard Asset, and may be used for defining an Algo token. This may, e.g., relate to tokens involved in smart contracts on the Algorand blockchain and/or the Ethereum blockchain. In embodiments, at least ASA is applied for token implementation, whereby the blockchain preferably comprises the Algorand blockchain and/or the Ethereum blockchain. In embodiments, the token is an Algo token, whereby the blockchain is the Algorand blockchain and/or the Ethereum blockchain and/or a blockchain different from the Algorand or Ethereum blockchain. In embodiments, at least ERC-20 is applied for token implementation, whereby the blockchain preferably comprises the Ethereum blockchain and/or the Ethereum blockchain. In embodiments, the token is an ERC-20 token, whereby the blockchain is the Algorand blockchain and/or the Ethereum blockchain and/or a blockchain different from the Algorand or Ethereum blockchain.

In this document, "extended reality" is an umbrella term for computer-generated environments that merge the physical and virtual worlds or create an entirely virtual experience for users. Thereby, extended reality (XR) may relate to any of virtual reality (VR), augmented reality (AR) and mixed reality (MR). Thereby, a physical entity may relate to an extended reality object. This may, e.g., relate to an object having a specification based on CAD modelling or similar, wherein the customization specification may relate to a variety of technical features.

In this document, blockchain technology may relate to any of Algorand, Ethereum, Bitcoin, Tron, XRP/Ripple, Stellar, and Neo, Cardano, Litecoin, IOTA, NEM, Dash, Monero, Lisk, Qtum, Zcash, Nano, Steem, Bytecoin, Verge, Siacoin, Stratis, BitShares, Dogecoin, Waves, Decred, Ardor, Hshare, Komodo, Electroneum, Ark, DigiByte, E-coin, ZClassic, Byteball Bytes, PIVX, Cryptonex, GXShares, Syscoin, Bitcore, Factom, MonaCoin, ZCoin, SmartCash, Particl, Nxt, ReddCoin, Emercoin, Experience Points, Neblio, Nexus, Blocknet, GameCredits, DigitalNote, Vertcoin, BitcoinDark, Bitcoin Cash, Skycoin, ZenCash, NAV Coin, Achain, HTMLCOIN, Ubiq, BridgeCoin, Peercoin, PACcoin, XTRABYTES, Einsteinium, Asch, Counterparty, BitBay, Viacoin, Rise, Guiden, ION, Metaverse ETP, LBRY Credits, Crown, Electra, Burst, MinexCoin, Aeon, SaluS, DECENT, CloakCoin, Pura, ECC, DeepOnion, Groestlcoin, Lykke, Steem Dollars, I/O Coin, Shift, HempCoin, Mooncoin, Dimecoin, Namecoin, Feathercoin, Diamond, Spectrecoin, Filecoin, Tezos, PPCoin, Tonal bitcoin, IxCoin, Devcoin, Freicoin, IOcoin, Terracoin, Liquidcoin, BBQcoin, BitBars, Gas, Tether, Ether Classic and PhenixCoin.

In embodiments, the token may be issued via a distribution wallet by a trusted entity, like a digital asset exchange, bank, or any other trusted entity, wherein the recording and transfer functionality for the token may be provided by smart contract technology combined with any blockchain technology, including established blockchain technologies like Algorand, Ethereum or the Bitcoin blockchain, respectively. As known to the skilled person, the recording of tokens and transfer of tokens may be associated with payments of digital coins, such as algo, ether or bitcoin, respectively.

In the context of the invention, smart contracts refer to autonomous agents operable in blockchain networks. A main advantage thereof may be that it helps to transfer money, property, shares, or anything of value in a transparent, conflict-free way while avoiding the services of a middleman. Thereby, individuals involved in the agreement can be anonymous, but the contract is encoded in a public ledger. Smart contracts may be used for all sorts of situations, including agreements relating to physical entities in the context of real estate.

As for blockchain technology, while Bitcoin is inherently conceived for a currency use case, Algorand and Ethereum may be better suited for agreement-oriented applications, such as smart contracts. For instance, Ethereum differs from Bitcoin in that it provides a language that allows developers to write their own programs, i.e., their own smart contracts, or autonomous agents. The language is Turing-complete, supporting a broad set of computational instructions. Smart contracts can function as "multi-signature" accounts, so that actions occur conditioned by a required percentage of parties agreeing. On the other hand, Algorand smart contracts may be implemented with Transaction Expression Approval Language (TEAL) which is non-Turing-complete. Algorand may thereby offer more reliability and/or improved performance for smart contracts, as certain functionality such as recursive logic is avoided.

In embodiments, smart contracts are used in combination/concatenation with other smart contracts. One contract may use outside data to determine whether a condition is met, and another contract could carry out an action, for instance a token transfer and/or payment, based on the information it received from the first contract when the condition is met.

The invention advantageously addresses the need for certification of physical entities for which the associated rights are distributed over several parties. In such context, agreements have traditionally played a major role, with common agreement types relating to renting, securities, and collaterals. On the other hand, also other rights associated with the physical entity may be distributed over several parties, such as intellectual property rights, and/or rights relating to customization of physical entities. For instance, a first party being an owner of a physical entity may allow a second party to customize the physical entity, thereby granting a right to customization to the second party. This may relate to a second party being a user of the physical entity, as in the case of, e.g., real estate renting, but may equally relate to customization purely for the sake of customization. The latter may for instance occur in art projects, wherein a municipality owns a physical object in an unfinished state, such as a statue or other object without outer finishing (e.g., top layer), and an artist is given the right to customize the object by providing a finishing, for instance a paint layer. In such a use case, the artist has the right to customization, and may or may not hold the rights to the artwork realized, whereas the municipality remains the owner of the object. In any case, the right to customization must satisfy the expectations of all parties involved, i.e., it is desirable that the associated agreement is encoded while providing unambiguity, integrity, authenticity, and non-repudiation. This is enabled by proper certification of the agreement.

In embodiments, the distribution wallet is a multi-signature wallet. This may have the advantage of providing higher security and/or improved non-repudiation, by ensuring that a single incident, e.g., a hacking incident, does not compromise the integrity of the distribution wallet.

In embodiments, the customization specification comprises a token amount. This may relate, e.g., to a discrete number of tokens, or a non-integer fraction of tokens. In embodiments where the physical entity relates to a real estate property, this may relate to the number of tokens being indicative of or proportional to the physical size of the property and/or the type of technical features chosen for customization. As the tokens are with the recipient wallet, the token amount may be considered as future 'credit' for the party associated with the recipient wallet.

In embodiments, the customization specification comprises at least a first and second technical feature, wherein said step of receiving the customization specification comprising the substeps of:
- providing, via a user interface, a plurality of options with respect to the first technical feature for said physical entity;
- receiving, via said user interface, a selected option for said first technical feature;
- calculating, based on said selection option of said first feature, a plurality of options with respect to a second technical feature for said physical entity, preferably based on a compatibility with said selected option for said first feature;
- providing, via said user interface, said calculated plurality of options with respect to said second technical feature;
- receiving, via said user interface, a selected option for said second technical feature;
wherein said generated electronic document comprises each of the selected options for said first and second technical feature.

Such embodiments may be advantageous in that they may prevent compatibility issues with selected options. For instance, in a real estate context, it may be that the tenant first selects the heating technology to then select the finishing of the floor. Thereby, the tenant may choose floor heating. In a next step, based on this choice, it may be calculated that the options for floor finishing no longer include wood, as the type of wood used is found not to be technically suitable for combination with floor heating. In embodiments, the selection is thereby realized by means of a graphical user interface. Advantageously, the selection may be indicated on the generated electronic document, which is certified by the token emission on the blockchain.

In embodiments, the token is an Algo token or an ASA, offering the advantage of promising and reliable token technology. In embodiments, this is advantageously combined with Algorand as technology for the blockchain.

In embodiments, the token is an ERC-20 token, offering the advantage of mature and widely supported token technology. In embodiments, this is advantageously combined with Ethereum as technology for the blockchain.

In embodiments, the method comprises the further step of:
- recording, on said blockchain, a transfer of said token from said recipient wallet to a new recipient wallet.

This may have the advantage of providing enhanced control for the party associated with the recipient wallet, without requiring confirmation from any other party involved in the certification. On the other hand, the invention may advantageously provide transparency with respect to said transfer, as anyone with the block transaction number associated with the original token emission may follow the further transfers by inspecting the blockchain.

In embodiments, said recording of said transfer is a trigger for a smart contract independent of the emission of said token from said distribution wallet. This may have the advantage of allowing provisions, e.g., allowing agreement provisions between parties, regarding token transfer already at the time of original emission of the token. To the extent that the token emission may be considered a first smart contract, the triggering may relate to a first smart contract triggering a second smart contract, i.e., a chain of smart contracts.

In embodiments, the method comprises the further steps of:
- storing said electronic document;
- crawling the blockchain for an update relating to the token associated with said document;
- upon detection of an update, generating an alert.

This may have the advantage of increased transparency and flexibility. Rather than limiting the flexibility with respect to token transfer, the fact that the token transfer is public may be used to detect token transfers as they occur, which may imply a need to act in view of the update. In embodiments, the alert relates to notifying a party through a message or e-mail and/or to carrying out an action and/or automatically triggering a smart contract.

In embodiments, said physical entity relates to an extended reality virtual object. This may advantageously relate to, e.g., an object having a specification based on CAD modelling or similar, wherein the customization specification may relate to technical features such as visual or other sensory appearance and/or behavior within extended reality that relates to dimensions or material properties such as weight or surface properties, etc.

In embodiments, said physical entity relates to a real estate property. Thereby, in preferred embodiments, the entity id comprises a geographic location reference, preferably comprising at least one of: a street address, a floor number, geographic coordinates.

In embodiments, the server comprised in the system the server is further configured to:
- based upon said stored document, crawl the blockchain for an update relating to the token associated with said document;
- upon detection of an update, generate an alert.

In embodiments, the distribution wallet is secured using a multi signature smart contract protocol and a cold wallet storage, preferably a Gnosis Safe multi signature wallet.

In the below, example embodiments of the invention will be described that illustrate the invention, without limiting the scope of the invention.

### Example - real estate and owner/tenant agreement

In this example according to embodiments of the invention, a specific application relating to real estate is considered. This example may elucidate the advantages of the invention over state-of-the-art real estate methods and systems.

In a real estate context, a tenant interested in a real estate project is brought in contact with an owner. Thereby, the tenant may be offered a variety of real estate projects, wherein each real estate project corresponds to a physical object, e.g., an apartment, a house, or a plurality of apartments and/or houses. Thereby, some projects may be in their final construction stage, allowing some features to be adaptable or customizable. This relates to technical features of the project. This may include, e.g., any or any combination of garden architecture, the finishing of the floor, the technical details of the heating and/or ventilation and/or air-conditioning, furniture, household equipment, lights, tapestry, floor tiles, painting walls, drapes, shower, bathtub, kitchen (sink, dishwasher, washing machine), home cinema, speakers, chimney. Thereby, some elements may be mandatory (e.g., at least one form of heating) while other may be optionally added (e.g., speakers). The choice of what is customizable may relate to a plurality of options available where a party, e.g., a tenant, may select from.

In a traditional real estate approach, a tenant interested in a real estate project may be brought in contact with an owner through an online catalogue, offered, e.g., on a website. Thereby, the tenant may find a variety of real estate projects on a website, and select a variety of options, without any lasting ownership with regard to the selected options, since the customization remains with the property also after the tenant moves out. In contrast, the method according to the invention allows for ownership of the rights to customization of the property, in the form of a token, which may be kept or transferred also after the tenant moves out. In examples, the token may be reused by the tenant as right when they move out of a current property and move into another property also owned by the same owner.

Also, in a traditional real estate approach, the tenant may find a variety of real estate projects with extensive price lists, without indication regarding compatibility of options. In embodiments, this may be resolved by the invention through adequate calculation of compatibility.

From yet another perspective, the blockchain certification bought by the tenant may provide them with proof that they are allowed to adapt the interior and/or garden of the rented house. In this sense, the house owner transfers an intangible right or "intellectual property" to the tenant while maintaining ownership of the physical entity, including the land and the construction elements such as the walls.

As such, the certification according to the invention creates a proof of an agreement made between the owner and the tenant, which may be "notarized" by a third party linked to the distribution wallet. The third party may structure the emission of the token and maintain the transparency of the token as a transferable and ownable proof of a personalisation right. By being linked to the blockchain, the emitted token constitutes a "time capsule" containing all the certification instances and their respective signature dates.

Thereby, the token may be a means to secure an authorization for personalizing a rented good. The token may thereby be transferable to another person by donating the keys of the recipient wallet. The owned token could be used for a new rented property after having left the previous one.

The recorded information in the blockchain thereby constitutes irrefutable proof of the authorization of customizing the property over time.

In embodiments, if a token is transferred to another wallet, this may not be automatically considered as a valid authorization for customization, but rather requires additional agreement with the owner.

In case of loss of recipient wallet, or loss of access thereto, it is natural that the agreement between owner and tenant provides that the tenant, in such circumstances, maintains the customizations as they are. However, as the token is no longer transferable, it is not certain that the entitlement to customization may be carried over from one property to another.

In case of transfer of the token or the recipient wallet to another person, it is natural that some form of agreement between owner and new token holder should be made. Regardless, the transfer of tokens may be carried out without intervention of the owner or the third party.

### (end of Example)

In the above, several examples are given wherein the token relates to an Algo token and/or an ERC-20 token. However, the token may relate to any distributed ledger technology and may be of any kind. For instance, the token may relate to a TRC-20 according to Tron's token standard. Also, in this document multiple references are made to blockchain technology, which is considered publicly accessible blockchain technology, yet the invention is not limited thereto. Particularly, any ledger technology different from blockchain may be used, and everything disclosed in this document for blockchain technology may be applied to any other distributed or non-distributed ledger technology as well.

## Claims

1. A computer-implemented method for certifying a physical entity on a blockchain, comprising the steps of:
- receiving a specification of said physical entity, said specification comprising an entity id;
- receiving a customization specification with respect to said physical entity, said customization specification comprising at least one technical feature;
- providing a recipient wallet;
- emitting, from a distribution wallet, one or more tokens to said recipient wallet, thereby generating a blockchain transaction number;
- generating an electronic document, comprising at least said entity id, said at least one technical feature, an identification associated with said recipient wallet, and a reference toward said blockchain transaction number.

2. Method of claim 1, wherein the distribution wallet is a multi-signature wallet.

3. Method of claims 1-2, wherein the customization specification comprises a token amount.

4. Method of claims 1-3, wherein the customization specification comprises at least a first and second technical feature, wherein said step of receiving the customization specification comprising the substeps of:
- providing, via a user interface, a plurality of options with respect to the first technical feature for said physical entity;
- receiving, via said user interface, a selected option for said first technical feature;
- calculating, based on said selection option of said first feature, a plurality of options with respect to a second technical feature for said physical entity, preferably based on a compatibility with said selected option for said first feature;
- providing, via said user interface, said calculated plurality of options with respect to said second technical feature;
- receiving, via said user interface, a selected option for said second technical feature;
wherein said generated electronic document comprises each of the selected options for said first and second technical feature.

5. Method of claims 1-4, wherein the token is an Algo token or an ERC-20 token.

6. Method of claims 1-5, comprising the further step of:
- recording, on said blockchain, a transfer of said token from said recipient wallet to a new recipient wallet.

7. Method of claim 6, wherein said recording of said transfer is a trigger for a smart contract independent of the emission of said token from said distribution wallet.

8. Method of claims 1-7, comprising the further steps of:
- storing said electronic document;
- crawling the blockchain for an update relating to the token associated with said document;
- upon detection of an update, generating an alert.

9. Method of claim 1-8, wherein said physical entity relates to an extended reality virtual object.

10. Method of claim 1-8, wherein said physical entity relates to a real estate property.

11. Method of claim 10, wherein the entity id comprises a geographic location reference, preferably comprising at least one of: a street address, a floor number, geographic coordinates.

12. Device comprising a processor and memory comprising instructions which, when executed by said processor, cause the device to execute the method according to claims 1-11.

13. System comprising the device of claim 12 and a server connected to said device, wherein said device is further configured to:
- send the generated electronic document to the server; and
wherein said server is configured to:
- upon receipt of said electronic document, store said electronic document.

14. System of claim 13, wherein the server is further configured to:
- based upon said stored document, crawl the blockchain for an update relating to the token associated with said document;
- upon detection of an update, generate an alert.

15. Computer program product for carrying out a computer-implemented method according to claims 1-11, which computer program product comprises at least one readable medium in which computer-readable program code portions are saved, which program code portions comprise instructions for carrying out said method.
